# EUROPÄISCHE PATENTSCHRIFT

(11) **EP 3 462 054 B1**
(45) Veröffentlichungstag und Bekanntmachung des Hinweises auf die Patenterteilung: **06.01.2021**
(21) Anmeldenummer: 18192670.0
(22) Anmeldetag: 05.09.2018
(51) Int. Cl.: F16F 9/346, B60N 2/22, F16F 9/516, F16F 9/52, F16F 9/14, B60N 2/20, B60N 2/36

(54) **SITZANORDNUNG MIT ROTATIONSDÄMPFER FÜR EIN FAHRZEUG**
SEAT ASSEMBLY WITH A ROTARY DAMPER FOR A VEHICLE
DISPOSITIF DE SIÈGE POUR VÉHICULE AVEC UN AMORTISSEUR ROTATIF

(30) Priorität: 07.09.2017 DE 102017215830
(43) Veröffentlichungstag der Anmeldung: 03.04.2019
(73) Patentinhaber: Stabilus GmbH, 56070 Koblenz (DE)
(72) Erfinder: Löhken, Lars, 53545 Linz am Rhein (DE); Müller, Markus, 56072 Koblenz (DE); Piroth, Raphael, 56077 Koblenz (DE); Probst, Ulrich, 56204 Hillscheid (DE)
(74) Vertreter: Weickmann & Weickmann PartmbB

(56) Entgegenhaltungen:
- EP-A1- 1 467 013
- WO-A1-03/056121
- JP-A- H07 229 531
- JP-A- 2004 003 584
- JP-A- 2008 094 148
- JP-A- 2011 033 058
- KR-A- 20140 120 727
- US-A- 871 329
- US-A1- 2005 006 189
- US-A1- 2010 164 262
- US-A1- 2011 121 622
- US-A1- 2013 328 342

## Beschreibung

Die vorliegende Erfindung betrifft Verbesserungen an Sitzanordnungen für Fahrzeuge. Sie ist durch den Gegenstand des Anspruchs 1 definiert.

Gemäß einem Aspekt betrifft die vorliegende Erfindung eine Sitzanordnung mit einem Rotationsdämpfer, umfassend ein fluidgefülltes Dämpfergehäuse und einen innerhalb des Dämpfergehäuses um eine Rotationsachse des Rotationsdämpfers in eine erste Richtung und eine entgegengesetzte zweite Richtung rotierbar aufgenommenen Kolben mit einer sich in Richtung der Rotationsachse erstreckenden Kolbenstange, wobei der Kolben wenigstens eine Durchbrechung mit einem Strömungsquerschnitt aufweist, welche ein Strömen von Fluid durch den Kolben ermöglicht, wobei sich einen Gesamt-Strömungsquerschnitt als die Summe der Strömungsquerschnitte der wenigstens einen Durchbrechung ergibt.

Derartige Rotationsdämpfer sind in vielerlei Anwendungen im Einsatz, in denen eine Rotationsbewegung von zwei Bauteilen gegeneinander gedämpft werden soll, wobei dementsprechend das Dämpfergehäuse einer der beiden Komponenten zugeordnet ist, während die Kolbenstange der anderen der beiden Komponenten zugeordnet ist. Die Kolbenstange kann sich hierbei selbst an einer oder beiden Seiten aus dem Dämpfergehäuse hinaus erstrecken, als Hohlwelle gebildet sein, die einen Eingriff eines externen Elements erlaubt, oder beispielsweise auch an ihrem Ende ein Innengewinde oder Innenprofil für einen derartigen Eingriff aufweisen. Ferner lässt sich die Dämpfungshärte, d.h. die einer Rotationsbewegung zwischen den beiden Komponenten entgegenwirkende Dämpfungskraft auf verschiedene Weise einstellen, beispielsweise durch die Wahl des in dem Dämpfergehäuse vorgesehenen Fluids. Hierbei führt eine erhöhte Viskosität des Fluids auch zu einer höheren Dämpfung.

Insbesondere wenn das in dem Dämpfergehäuse vorgesehene Fluid eine Flüssigkeit ist, die als solche inkompressibel ist, ist auch der Umströmungs- bzw. Durchströmungsquerschnitt des Kolbens von entscheidender Bedeutung, da ein durch einen größeren Umströmungs- bzw. Durchströmungsquerschnitt vereinfachtes Strömen des Fluids um den Kolben herum bzw. durch diesen hindurch eine Verdrängung des Fluids von der einen der beiden durch den Kolben und das Dämpfergehäuse gebildeten Kammern in die jeweils andere vereinfacht und daher für eine verringerte Dämpfungshärte gegenüber einer Rotationsbewegung sorgt.

Derartige Rotationsdämpfer weisen jedoch bei einer Rotation des Kolbens in dem Dämpfergehäuse in beiden möglichen Rotationsrichtungen dieselbe Dämpfungshärte auf, da der zur Verfügung stehende Umströmungs- bzw. Durchströmungsquerschnitt des Kolbens nicht von der Richtung der Rotation des Kolbens abhängt. Es kann jedoch in gewissen Anwendungen gewünscht sein, eine richtungsabhängige Dämpfung vorzusehen, beispielsweise in dem weiter unten angesprochenen Beispiel einer Sitzanordnung mit einer umlegbaren Rückenlehne in einem Kraftfahrzeug.

In diesem Anwendungsbeispiel kann durch eine erhöhte Dämpfungshärte in Umlegerichtung der Rückenlehne des Sitzes, d.h. bei ihrer Bewegung von einer im Wesentlichen vertikalen Position in eine im Wesentlichen horizontale Position, eine härtere Dämpfung gewünscht sein, da das Eigengewicht der Rückenlehne diese ohnehin in die im Wesentlichen horizontale Richtung zieht, während die entgegengesetzte Aufrichtbewegung der Rückenlehne mit einer verminderten Dämpfung ablaufen soll, damit ein Benutzer zusätzlich zum Eigengewicht der Rückenlehne durch den Rotationsdämpfer nur noch einen verminderten Widerstand überwinden muss.

Um die genannte Aufgabe eines Bereitstellens eines Rotationsdämpfers mit einer richtungsabhängigen Dämpfungskraft zu lösen, ist vorgeschlagen, dass in dem Rotationsdämpfer dem Kolben ferner eine Sperrvorrichtung zugeordnet ist, die dazu eingerichtet ist, den Strömungsquerschnitt von wenigstens einer der Durchbrechungen bei einer Rotation des Kolbens in eine erste Richtung gegenüber einer Rotation des Kolbens in die zweite Richtung zu verkleinern. Durch diese Maßnahme ergibt es sich, dass durch den verminderten Strömungsquerschnitt bei einer Bewegung des Kolbens in die erste Richtung die Dämpfungskraft höher ist, während bei einer Bewegung des Kolbens in die zweite Richtung durch den vergrößerten Strömungsquerschnitt die Dämpfungskraft vermindert ist.

Ferner versteht sich, dass wenngleich ein variabler Durchströmungsquerschnitt in dem Kolben vorgesehen ist, zusätzlich zu diesem auch noch ein Umströmungsquerschnitt um den Kolben herum zwischen diesem und dem Dämpfergehäuse vorgesehen sein kann. Dieser ist jedoch weiterhin richtungsunabhängig, so dass die variable Dämpfungskraft lediglich durch den richtungsabhängigen Durchströmungsquerschnitt hervorgerufen wird, während der Umströmungsquerschnitt für den Gesamt- Strömungsquerschnitt als konstanter Summand zu betrachten ist, der daher in der nachfolgenden Beschreibung vernachlässigt wird.

Insbesondere kann der Rotationsdämpfer derart ausgebildet sein, dass der Gesamt-Strömungsquerschnitt bei einer Rotation des Kolbens in die erste Richtung größer als Null ist. Auf diese Weise wird ein definierter Strömungsquerschnitt geschaffen, über den sich die Dämpfungshärte bei Rotation in die erste Richtung wesentlich genauer einstellen lässt, als wenn lediglich Leckströmungen des Fluids um den Kolben herum möglich sind.

Bei der Ausgestaltung der Sperrvorrichtung in einem derartigen Rotationsdämpfer kann an verschiedene Varianten gedacht werden. Beispielsweise kann ein Durchschlagventil im Kolbenkörper vorgesehen werden, das lediglich ein Strömen von Fluid bei einer Rotation des Kolbens in eine der beiden Rotationsrichtungen erlaubt, d.h. dass es derart in dem Kolben angeordnet ist, dass es bei Rotation des Kolbens in die erste Richtung sperrt, während es bei Rotation in die zweite Richtung öffnet. Da jedoch ein verminderter Strömungsquerschnitt auch bei Rotation in die erste Richtung vorhanden sein muss, um eine Rotation in die erste Richtung überhaupt zu erlauben, kann entweder ein Umströmungsquerschnitt um den Kolben herum an der Innenseite des Dämpfergehäuses vorgesehen sein oder weitere Durchbrechungen des Kolbens, die parallel zu dem Durchschlagventil verlaufen, aber stets geöffnet sind.

In einer besonders einfachen und daher bevorzugten Ausführungsform kann die Sperrvorrichtung durch wenigstens eine elastische Platte gebildet sein, welche dem Kolben derart zugeordnet ist, dass sie bei einer Rotation des Kolbens in die erste Richtung wenigstens eine der Durchbrechungen wenigstens abschnittsweise bedeckt und bei einer Rotation in die zweite Richtung die wenigstens eine der Durchbrechungen im Wesentlichen freigibt. Hierbei sorgt der dynamische Strömungsdruck des Fluids dazu, dass die elastische Platte bei Rotation in die erste Richtung gegen den Kolbenkörper gedrückt wird und hierbei wenigstens eine der Durchbrechungen wenigstens abschnittsweise bedeckt, während bei einer Rotation in die zweite Richtung die elastische Platte eine elastische Verformung vom Kolbenkörper weg durchläuft und somit die wenigstens eine ansonsten bedeckte Durchbrechung freigibt, so dass diese bei Rotation in die zweite Richtung zum Gesamt-Strömungsquerschnitt beitragen kann. Die elastische Platte kann an dem Kolbenkörper beispielsweise mittels eines Niets befestigt sein und aus einem dünnen Metallblech mit geeignet gewählter Elastizität bestehen.

In einer Weiterbildung kann die elastische Platte ferner wenigstens eine Durchbrechung aufweisen, welche sich bei Rotation des Kolbens in die erste Richtung wenigstens abschnittsweise mit einer der Durchbrechungen in dem Kolben überlappt. Durch das Vorsehen der wenigstens einen Durchbrechung in der elastischen Platte kann sichergestellt werden, dass die wenigstens eine von der Platte bei Rotation in die erste Richtung bedeckte Durchbrechung auch bei einer Rotation in die erste Richtung zum Gesamt-Strömungsquerschnitt beitragen kann, wenngleich mit einem verringerten Querschnitt gegenüber einer Rotation in die zweite Richtung, da in diesem Fall nicht mehr der gesamte Querschnitt der Durchbrechung im Kolben zum Durchströmen durch das Fluid zur Verfügung steht, sondern lediglich der durch die Durchbrechung in der Platte definierte Strömungsquerschnitt. Da Bohrungsarbeiten an der elastischen Platte leichter durchzuführen sind (oder diese gar gestanzt werden kann) als an dem vergleichsweise massiven Kolbenkörper, kann auf diese Weise durch lediglich eine Durchbrechung des Kolbenkörpers und eine weitere Durchbrechung der Platte ein variabler Strömungsquerschnitt geschaffen werden, ohne dass weitere Durchbrechungen am Kolbenkörper vorgesehen werden müssen, die von der Platte auch bei einer Rotation in die erste Richtung nicht verdeckt werden dürfen.

Zusätzlich oder alternativ kann es gewünscht sein, dass ein Rotationsdämpfer Dämpfungseigenschaften aufweist, die vom momentanen Rotationswinkel zwischen dem fluidgefüllten Dämpfergehäuse und dem darin aufgenommenen Kolben abhängen. Auch hierfür ist als Einsatzzweck an eine Sitzanordnung für ein Kraftfahrzeug gedacht, in der eine Rückenlehne umlegbar sein soll. Da beim Fortschreiten eines solchen Umlegevorgangs die Gewichtskraft der Rückenlehne bei einem Annähern an ihre horizontale Ausrichtung eine größer werdende Komponente aufweist, die vertikal nach unten und daher in Richtung des Umlegevorgangs wirkt, ist es gewünscht, wenn, um dieser zunehmenden Komponente der Gewichtskraft der Rückenlehne entgegen zu wirken, gleichzeitig die von einem zwischen der Sitzfläche und der Rückenlehne vorgesehenen Rotationsdämpfer aufgebrachte Dämpfungskraft ebenfalls zunimmt, um einem Benutzer durch eine im Wesentlichen gleichmäßig ablaufende Umlegbewegung einen erhöhten Komfort beim Bedienen der Rückenlehne zu bieten. Ähnliches gilt für Sitzanordnungen in Fahrzeugen, in denen die Sitzfläche selbst gegenüber dem Fahrzeug rotierbar angeordnet ist, beispielsweise nach vorne umklappbar, um den Sitz als Ganzes in eine verstaute Position zu verlagern.

Hierzu ist ein Rotationsdämpfer vorgeschlagen, der ein fluidgefülltes Dämpfergehäuse und einen innerhalb des Gehäuses um eine Rotationsachse des Rotationsdämpfers in eine erste Richtung und eine entgegengesetzte zweite Richtung rotierbar aufgenommenen Kolben mit einer sich in Richtung der Rotationsachse erstreckenden Kolbenstange umfasst, und ferner derart gebildet ist, dass an der Innenseite des Dämpfergehäuses über wenigstens einen Rotationswinkelabschnitt wenigstens ein Umgehungskanal bereitgestellt ist, welcher im Bereich seiner Erstreckung ein Umströmen des Kolbens durch Fluid in Richtung entgegen der Rotation des Kolbens ermöglicht.

Indem auf diese Weise abschnittsweise wenigstens ein Umgehungskanal für den Kolben vorgesehen wird, wird in den entsprechenden relativen Winkelpositionen zwischen Dämpfergehäuse und Kolben, an denen sich der Kolben gerade im Bereich des wenigstens einen Umgehungskanals befindet, ein zusätzlicher Umströmungsquerschnitt bereitgestellt, der in diesem Winkelbereich die Dämpfungskraft vermindert. Somit kann alternativ oder zusätzlich zu dem Bereitstellen einer rotationsrichtungsabhängigen Dämpfung eine rotationswinkelabhängige Dämpfung erzielt werden.

In einer beispielhaften Ausführungsform kann der wenigstens eine Umgehungskanal in einer Platte vorgesehen sein, welche sich im Wesentlichen senkrecht zu der Rotationsachse erstreckt, beispielsweise einem Boden des Dämpfergehäuses. Hierbei kann unter anderem an eine Platte gedacht werden, die als Einsatzteil vorgesehen und in den Innenraum des Dämpfergehäuses eingelegt ist. Ist der wenigstens eine Umgehungskanal hingegen unmittelbar im Boden des Gehäuses vorgesehen, so kann er beispielsweise in dieses hineingefräst sein.

Andererseits könnte der wenigstens eine Umgehungskanal selbstverständlich auch an einer Innenumfangsfläche des Dämpfergehäuses vorgesehen sein, wobei eine derartige Ausführung jedoch ggf. eine aufwändigere Bearbeitung des Dämpfergehäuses erfordert, da dessen Innenwände nicht im gleichen Maße zugänglich sind wie ein Boden des Dämpfergehäuses.

Der wenigstens eine Umgehungskanal kann unter Berücksichtigung der spezifische Anwendung, für die der erfindungsgemäße Rotationsdämpfer vorgesehen ist, prinzipiell beliebig ausgebildet sein, beispielsweise können in verschiedenen Winkelbereichen eine unterschiedlichen Anzahl von gleich ausgebildeten Umgehungskanälen vorgesehen werden, so dass ein oder mehrere Schaltwinkelpunkte definiert werden, bei deren Erreichen sich die Dämpfungshärte des Rotationsdämpfers ändert. Insbesondere kann in einer besonders einfachen Ausführungsform der wenigstens eine Umgehungskanal einen in Umfangsrichtung variablen Querschnitt aufweisen, beispielsweise einen linear ansteigenden Querschnitt. Auf diese Weise kann ein progressives Dämpfungsverhalten des erfindungsgemäßen Rotationsdämpfers erzielt werden, wobei bei einer Bewegung des Kolbens entgegen dem ansteigenden Querschnitt die Dämpfung des Rotationsdämpfers zunehmend härter wird.

Ferner umfasst der erfindungsgemäße Rotationsdämpfer ein fluidgefülltes Dämpfergehäuse und einen innerhalb des Dämpfergehäuses um eine Rotationsachse des Rotationsdämpfers in eine erste Richtung und eine entgegengesetzte zweite Richtung rotierbar aufgenommen Kolben mit einer sich in Richtung der Rotationsachse erstreckenden Kolbenstange, in dem ferner innerhalb des Dämpfergehäuses ein entlang der Rotationsachse verlagerbarer Boden vorgesehen ist.

Ein derartiger verlagerbarer Boden, der an einer Seite den fluidgefüllten Innenraum des Rotationsdämpfers begrenzt, stellt eine Weiterentwicklung eines bekannten Rotationsdämpfers dar, die zweierlei Aufgaben erfüllen kann. In beiden Fällen versteht sich jedoch, dass der verlagerbare Boden gegenüber der Innenwand des Dämpfergehäuses und gegenüber der Kolbenstange abgedichtet sein muss, so dass das in dem Dämpfergehäuse aufgenommene Fluid nicht um den Boden herum strömen kann, sondern der Boden ein dicht abgeschlossenes Volumen begrenzt, in dem sowohl das Dämpfungsfluid als auch der Kolben aufgenommen sind.

Der verlagerbare Boden kann einerseits als eine Überlastsicherung dienen, mittels derer eine Beschädigung des Rotationsdämpfers verhindert werden kann, wenn von außen auf diesen ein übermäßig starkes Drehmoment wirkt. Hierzu kann der verlagerbare Boden mittels eines elastischen Elements, beispielsweise einer mechanischen Feder, insbesondere einer Tellerfeder, in Richtung des Kolbens vorbelastet sein. Wirkt nun das angesprochene übermäßig große Drehmoment von außen auf den Rotationsdämpfer, d.h. zwischen dem Dämpfergehäuse und der Kolbenstange, so kann das in dem Dämpfergehäuse aufgenommene Fluid den verlagerbaren Boden gegen die Wirkung des elastischen Elements vom Kolben weg verdrängen, so dass ein zusätzlicher Umströmungsquerschnitt zwischen dem Kolben und dem Boden hergestellt wird. Auf diese Weise sinkt die Dämpfungshärte des Rotationsdämpfers, und der Kolben kann sich mit verringertem Widerstand gegenüber dem Dämpfergehäuse bewegen, so dass eine Beschädigung des Dämpfers verhindert wird. Durch geeignete Auswahl des elastischen Elements, beispielsweise durch Auswahl einer mechanischen Feder mit einer entsprechenden Federhärte, kann eingestellt werden, ab welchem extern anliegenden Drehmoment sich der verlagerbare Boden gegen die Wirkung des elastischen Elements anhebt, da ab diesem Drehmomentwert dann eine reguläre Strömung des Fluid durch den Kolben hindurch bzw. um den Kolben herum nicht mehr ausreichend ist. Auf diese Weise kann festgelegt werden, unter welchen Bedingungen die durch Boden gebildete Überlastsicherung ihre Wirkung entfaltet.

Wenngleich der verlagerbare Boden auch in der zum Kolben hin vorgespannten Position von diesem beabstandet sein kann, beispielsweise in dem er an an der Gehäuseinnenwand vorgesehenen Anlageflächen zur Anlage kommt und somit ein gewisser Umströmungsquerschnitt um den Kolben herum zu jedem Zeitpunkt zur Verfügung steht, kann andererseits dem Kolben auch ein axiales Dichtungselement zugeordnet sein, wobei der verlagerbare Boden durch die Wirkung des elastischen Elements gegen das axiale Dichtungselement zur Anlage kommt. Auf diese Weise wird in dem Zustand, in dem der verlagerbare Boden gegen den Kolben vorgespannt ist, ein Umströmen des Kolbens an der Seite des verlagerbaren Bodens verhindert.

Ein weiterer erfindungsgemäßer Teilaspekt eines innerhalb des Dämpfergehäuses entlang der Rotationsachse verlagerbaren Bodens besteht darin, dass der Rotationsdämpfer ein thermisches Dehnungselement umfasst, welches derart eingerichtet und angeordnet ist, dass es bei zunehmender Temperatur den verlagerbaren Boden weiter in Richtung des Kolbens verlagert. Zu diesem Zweck können beispielsweise aus Thermostaten bekannte Dehnungswachse verwendet werden, die bei einer steigenden Temperatur eine Ausdehnung erfahren, und in dieser Weise den verlagerbaren Boden näher in Richtung des Kolbens bewegen. Durch diese Maßnahme kann dafür gesorgt werden, dass der bei steigender Temperatur geringer werdenden Viskosität vieler Dämpfungsfluide, wie beispielsweise Hydrauliköl, dadurch entgegengewirkt wird, dass der zwischen dem Kolben und dem verlagerbaren Boden vorgesehene Umströmungsquerschnitt für den Kolben verringert wird. Somit ist es möglich, mit einem derartigen Rotationsdämpfer über einen breiten Temperaturbereich im Wesentlichen gleiche Dämpfungseigenschaften zu erhalten, ohne dass hierfür auf aufwändige Maßnahmen oder spezielle temperaturunempfindliche Dämpfungsfluide zurückgegriffen werden müsste.

Im Zusammenhang mit dem als Überlastsicherung vorgesehenen verlagerbaren Boden wird auch noch ganz allgemein ein Rotationsdämpfer beschrieben, umfassend ein fluidgefülltes Dämpfergehäuse und einen innerhalb des Dämpfergehäuses um eine Rotationsachse des Rotationsdämpfers in eine erste Richtung und eine entgegengesetzte zweite Richtung rotierbar aufgenommenen Kolben mit einer sich in Richtung der Rotationsachse erstreckenden Kolbenstange sowie eine Überlastsicherung, welche bei einem übermäßig starken von außen auf diesen einwirkenden Drehmoment ein Umströmen des Kolbens ermöglicht. Hierbei kann neben dem bereits beschriebenen verlagerbaren Boden beispielsweise auch daran gedacht werden, Dichtungen zwischen dem Kolben und dem Gehäuse vorzusehen, die bei Überschreiten eines Drehmomentschwellenwerts mechanisch nachgeben und ihre Dichtungseigenschaften verlieren, so dass an dieser Stelle dann ein Umströmen des Kolbens ermöglicht wird.

Bei den beschriebenen Rotationsdämpfern kann es vorteilhaft sein, wenn der Kolben bezüglich der Rotationsachse punktsymmetrisch oder drehsymmetrisch ausgebildet ist. Hierdurch können auf die Kolbenstange wirkende Schermomente ausgeglichen oder aufgenommen werden, und es wird eine Vergleichmäßigung der auf den Kolben wirkenden Kräfte um die Kolbenstange herum erzielt.

Weiterhin kann es in allen bis hierhin beschriebenen Rotationsdämpfern vorteilhaft sein, wenn an der Innenwand des Dämpfergehäuses wenigstens ein Anschlag vorgesehen ist, welcher eine Rotation des Kolbens an einer vorbestimmten Winkelposition begrenzt. Hierdurch wird ein maximaler Rotationswinkelbereich festgelegt, über den die relative Rotation zwischen Dämpfergehäuse und Kolben bzw. Kolbenstange ablaufen kann. Wird auf das Vorsehen derartiger Anschläge verzichtet, so können sich in einem derartigen Dämpfer das Dämpfergehäuse und die Kolbenstange zunächst einmal endlos in beide Rotationsrichtungen gegeneinander drehen, was in manchen Anwendungen derartiger Dämpfer durchaus gewünscht sein kann, oder es können alternativ externe Anschläge vorgesehen werden, beispielsweise an den über den Rotationsdämpfer drehbar gegeneinander gelagerten Komponenten.

Weiterhin kann in sämtlichen beschriebenen Rotationsdämpfern zwischen dem Kolben und der Innenwand des Dämpfergehäuses wenigstens ein Dichtungselement vorgesehen sein. Auch durch das Vorsehen eines derartigen Dichtungselements wird an der entsprechenden Stelle, d.h. an wenigstens einem radial äußeren Ende des Kolbens zwischen diesem und der Innenwand des Dämpfergehäuses, ein Umströmen des Kolbens verhindert. Durch diese Maßnahme kann ferner eine auf den Kolben wirkende Scherkraft an dieser Stelle an dem Dämpfergehäuse abgestützt werden, so dass auch diese Maßnahme zur Widerstandsfähigkeit und Haltbarkeit entsprechender Rotationsdämpfer beiträgt.

Aus ähnlichen Gründen kann als weitere Maßnahme jeder der beschriebenen Rotationsdämpfer derart ausgeführt sein, dass sein Kolben im Bereich der Rotationsachse einen im Wesentlichen kreisförmigen Nabenbereich aufweist, von welchem sich wenigstens ein Flügelbereich in Richtung der Innenwand des Dämpfergehäuses erstreckt, wobei sich ferner von der Innenwand des Dämpfergehäuses wenigstens ein Vorsprung in Richtung des Nabenbereichs erstreckt, wobei zwischen dem Vorsprung und dem Nabenbereich vorzugsweise eine Spaltdichtung vorgesehen ist.

In ähnlicher Weise wie die zwischen Kolben und Gehäuseinnenwand an den axial äußeren Enden des Kolbens vorgesehenen Dichtungen können auch die an Vorsprüngen des Dämpfergehäuses vorgesehenen Dichtungen einerseits ein Umströmen des Kolbens verhindern und andererseits kann der Nabenbereich des Kolbens an dieser Stelle gegenüber dem Dämpfergehäuse abgestützt sein. Es ist jedoch zu beachten, dass von der Gehäuseinnenwand in Richtung der Rotationsachse vorstehende Vorsprünge stets auch eine Begrenzung des möglichen Rotationswinkels darstellen, da der Kolben mit seinen Flügelbereichen unweigerlich bei bestimmten Winkelpositionen gegenüber dem Dämpfergehäuse gegen diese zum Anschlag kommen wird. Somit ist diese Maßnahme nur für Rotationsdämpfer geeignet, in denen ohnehin ein Winkelanschlag vorgesehen werden soll, wobei gegebenenfalls die Vorsprünge auch als Anschläge dienen können und damit beide genannten Funktionen übernehmen.

Durch die vorliegende Erfindung ist eine Sitzanordnung mit einer festen Sitzfläche und einer umlegbaren Rückenlehne für ein Fahrzeug bereitgestellt, in der zwischen der festen Sitzfläche und der umlegbaren Rückenlehne ein Dämpfer vorgesehen ist, welcher bei einem Umlegen der Rückenlehne von der im Wesentlichen vertikalen Position in die im Wesentlichen horizontale Position eine größere Dämpfungskraft aufweist als bei einer entgegengesetzten Bewegung der Rückenlehne. Hierdurch ergibt sich beim Umlegen und Aufrichten der Rückenlehne der Vorteil, dass durch die erhöhte Dämpfung beim Umlegen der Gewichtskraft der Rückenlehne entgegengewirkt wird, um ein unkontrolliertes Herunterfallen der Rückenlehne zu verhindern. Andererseits wird jedoch einem Benutzer das Aufrichten der Rückenlehne in entgegengesetzter Richtung erleichtert, in welche er ohnehin gegen die Gewichtskraft der Rückenlehne arbeitet. Es sei darauf hingewiesen, dass wenngleich in der eben beschriebenen Sitzanordnung ein Rotationsdämpfer gemäß dem ersten Aspekt der Erfindung zum Einsatz kommen kann, dies nicht unbedingt der Fall sein muss, sondern beispielsweise auch ein Lineardämpfer mit richtungsabhängigen Dämpfungseigenschaften eingesetzt werden kann, der zusammen mit einer Umlenkvorrichtung bereitzustellen ist, welche die Rotationsbewegung der Rückenlehne bzgl. der Sitzfläche in eine lineare Bewegung des Lineardämpfers umwandelt.

Eine Sitzanordnung mit einer festen Sitzfläche und einer umlegbaren Rückenlehne, die jedoch bei einem Umlegen der Rückenlehne von einer im Wesentlichen vertikalen Position in eine im Wesentlichen horizontale Position eine geringere Dämpfungskraft aufweist als bei einer entgegengesetzten Bewegung der Rücklehne, ist beispielsweise aus der JP 2008-094148 A, der JP 2011-033058 A und der JP 2004-003584 A bekannt.

Eine Sitzanordnung mit einer festen Sitzfläche und einer umlegbaren Rückenlehne, die bei einem Umlegen der Rückenlehne von einer im Wesentlichen vertikalen Position in eine im Wesentlichen horizontale Position eine größere Dämpfungskraft aufweist als bei einer entgegengesetzten Bewegung der Rücklehne, ist beispielsweise aus der US 2013/328342 A1 bekannt. Ferner sind Rotationsdämpfer mit unterschiedlichen Eigenschaften, wie sie beispielsweise in der vorliegenden Erfindung zum Einsatz kommen können, aus der US 2005/006189 A1, der US 2011/121622 A1, der US 871,329 A, der EP 1 467 013 A1, der WO 03/056121 A1, der KR 2014-0120727 A und der US 2010/164262 A1 bekannt.

Es kann weiterhin wünschenswert sein, wenn in einer derartigen Sitzanordnung der Dämpfer bei einem Umlegen der Rückenlehne von der im Wesentlichen vertikalen Position in die im Wesentlichen horizontale Position eine zunehmende Dämpfungskraft aufweist, so dass die bei einem Übergang von der Vertikalen in die Horizontale zunehmende vertikal wirkende Komponente der Gewichtskraft der Rückenlehne durch härtere Dämpfungseigenschaften des Dämpfers in diesen Winkelpositionen ausgeglichen wird. Diese Dämpfungscharakteristik kann einerseits dadurch erreicht werden, dass ein Rotationsdämpfer verwendet wird, oder andererseits in ähnlicher Weise wie oben genannt ein Lineardämpfer mit den genannten Eigenschaften.

Durch geeignete Anpassung der richtungs- und winkelabhängigen Dämpfungseigenschaften eines derartigen Rotationsdämpfers bzw. einer Lineardämpfer-Umlenkvorrichtungs-Baugruppe an das Gewicht der Rückenlehne zur umklappbaren Verbindung zwischen fester Sitzfläche und Rückenlehne kann erreicht werden, dass bei einem Umlegen der Rückenlehne von der im Wesentlichen vertikalen Position in die im Wesentliche horizontale Position eine im Wesentlichen konstante Kraft aufzubringen ist.

Weitere Merkmale und Vorteile der vorliegenden Erfindung werden aus der nachfolgenden Beschreibung von Ausführungsformen deutlich, wenn diese zusammen mit den beiliegenden Figuren betrachtet wird. Diese Figuren zeigen im Einzelnen:
- Fig. 1: einen Rotationsdämpfer wie er in einer erfindungsgemäßen Sitzanordnung zum Einsatz kommen kann, in montiertem Zustand von außen in einer Seitenansicht;
- Fig. 2: den Rotationsdämpfer aus Fig. 1 in einer Schnittansicht entlang einer Schnittebene senkrecht zu seiner Rotationsachse;
- Fig. 3: den Rotationsdämpfer aus den Figuren 1 und 2 in einer Querschnittsansicht entlang einer Schnittebene parallel zu der Rotationsachse;
- Fig. 4a und 4b: Detailansichten von möglichen Ausführungen des Kolbens des Rotationsdämpfers aus den Figuren 1 bis 3;
- Fig. 5a und 5b: den Kolben aus Fig. 4a in einer Schnittansicht bei Rotation in entgegengesetzte Richtungen; und
- Fig. 6: eine schematische Seitenansicht einer erfindungsgemäßen Sitzanordnung.

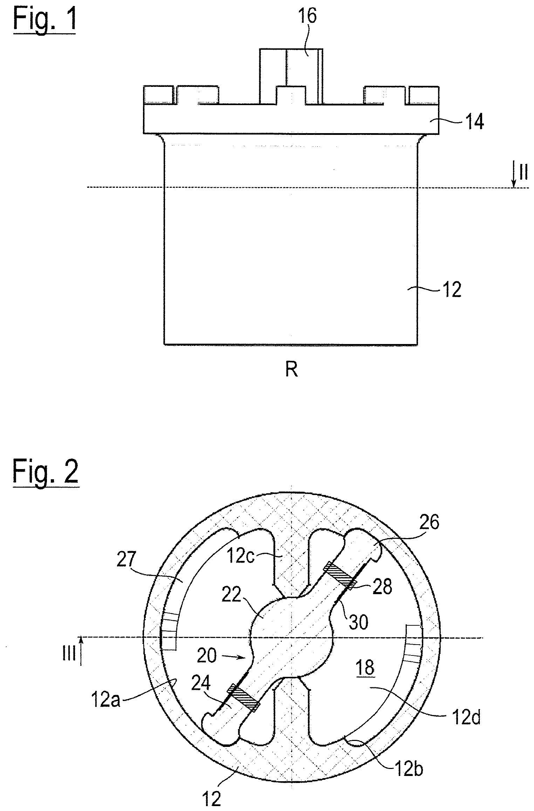

In Figur 1 ist zunächst ein Rotationsdämpfer in montiertem Zustand in einer Seitenansicht gezeigt und ganz allgemein mit dem Bezugszeichen 10 bezeichnet. Er umfasst ein kreiszylinderförmiges Dämpfergehäuse 12 mit einer daran befestigten Endkappe 14, die in bekannter Weise beispielsweise durch Aufschrauben oder mittels eines Bajonettverschlusses befestigt ist. Durch diese Endkappe 14 hindurch erstreckt sich eine Kolbenstange 16, wobei zwischen dem Dämpfergehäuse 12, der Endkappe 14 und der Kolbenstange 16 jeweils Dichtungselemente angeordnet sind, so dass innerhalb des Dämpfergehäuses 12 ein dichter Innenraum geschaffen ist, in dem ein Dämpfungsfluid aufgenommen ist.

Das Dämpfergehäuse 12 und die daran befestigte Endkappe 14 einerseits und die Kolbenstange 16 andererseits sind gegeneinander um eine Rotationsachse R rotierbar, wobei senkrecht zu dieser Rotationsachse R durch die Ebene II ein Schnitt angedeutet ist, entlang dem die Ansicht aus Fig. 2 ausgeführt ist.

In dieser Fig. 2 ist einerseits neben dem bereits angesprochenen Dämpfergehäuse 12 der in diesem vorgesehene Innenraum 18 gezeigt, der wie angesprochen mit einem Dämpfungsfluid, beispielsweise einem Hydrauliköl, gefüllt ist. Des Weiteren ist innerhalb des Dämpfergehäuses 12 ein Kolben 20 vorgesehen, der eine axiale Verlängerung der Kolbenstange 16 aus Fig. 1 darstellt. Dieser Kolben 20 ist ebenso wie das Dämpfergehäuse 12 punktsymmetrisch um die Rotationsachse R ausgebildet und umfasst einen im Wesentlichen kreisförmigen Nabenbereich 22, der sich um die Rotationsachse R erstreckt, zwei sich von diesem Nabenbereich 22 radial nach außen erstreckenden Flügelbereiche 24 sowie zwei radiale Enden 26. Zwischen den radialen Enden 26 des Kolbens 20 und der Innenwand 12a des Dämpfergehäuses 12 können dem Kolben 20 zugeordnete Dichtungselemente vorgesehen sein, so dass ein Umströmen des Kolbens 20 an seiner radialen Außenseite verhindert wird.

Des Weiteren sind in der Fig. 2 an der Innenwand 12a des Dämpfergehäuses 12 vorstehende Anschläge 12b dargestellt, die den möglichen Rotationswinkelbereich zwischen dem Kolben 20 und dem Dämpfergehäuse 12 beschränken, wenn der Kolben 20 mit seinen radial äußeren Enden 26 an den jeweiligen Anschlägen 12b zur Anlage kommt, wie dies in Fig. 2 auch gerade gezeigt ist. Noch weiter von der Innenwand 12a des Dämpfergehäuses 12 als die Anschläge 12b erstrecken sich ebenfalls in symmetrischer Weise zwei Vorsprünge 12c, und zwar so weit, bis sie den Nabenbereich 22 des Kolbens 20 erreichen. Auch zwischen diesen Vorsprüngen 12c und dem Nabenbereich 22 des Kolbens 20 können Dichtungselemente vorgesehen sein, so dass einerseits ein Umströmen des Kolbens 20 in diesem Bereich verhindert wird und andererseits eine Übertragung von auf den Kolben 20 wirkenden Scherkräften auf das Dämpfergehäuse 12 an dieser Stelle ermöglicht wird.

Es sei in diesem Zusammenhang darauf hingewiesen, dass wenngleich die Vorsprünge 12c auch die Funktion der Anschläge 12b übernehmen könnten, durch den in Fig. 2 gezeigten Winkelabstand zwischen den Vorsprüngen 12c und den Anschlägen 12b nicht-lineare Dämpfungseffekte vermieden werden können, die beispielsweise auftreten würden, wenn der Kolben 20 großflächig an den Vorsprüngen 12c zur Anlage käme, wobei dann beim erneuten Lösen des Kolbens 20 von den Vorsprüngen 12c eine Sogwirkung auftreten würde.

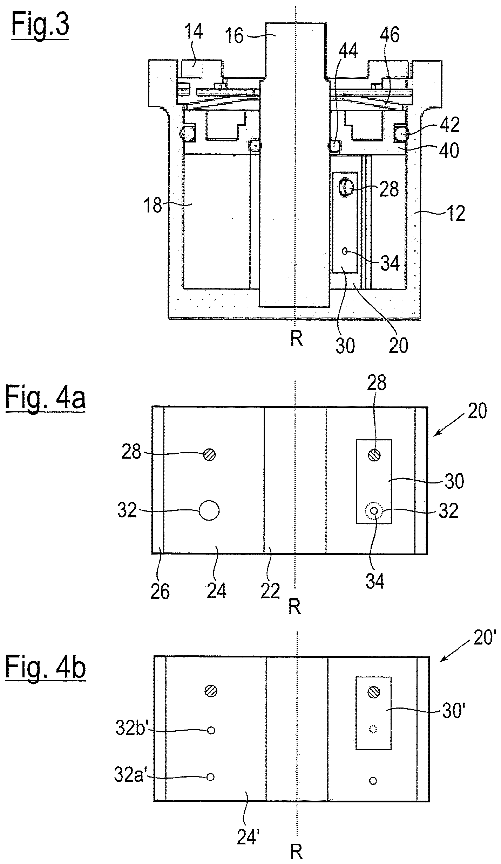

Des Weiteren zeigt die Fig. 2 in dem im Wesentlichen ebenen Boden 12d des Dämpfergehäuses zwei ebenfalls punktsymmetrisch aufgebaute Umgehungskanäle 27, die sich jeweils von einem der Vorsprünge 12c in Umfangsrichtung entgegen dem Uhrzeigersinn mit abnehmendem Querschnitt erstrecken und im Bereich ihrer Erstreckung ein Umströmen des Kolbens 20 durch das Dämpfungsfluid ermöglichen. Durch diese Umgehungskanäle 27 wird eine progressiv zunehmende, winkelabhängige Dämpfungskraft erzielt, die bei einer Bewegung des Kolbens 20 von dem entsprechenden Vorsprung 12c weg entgegen dem Uhrzeigersinn zunimmt Zuletzt sei im Zusammenhang mit Fig. 2 auf die beiden in den Flügelbereichen 24 des Kolbens 20 aufgenommenen Niete 28 hingewiesen, die durch in den Flügelbereichen 24 vorgesehene Bohrungen verlaufen und jeweils eine elastische Platte 30 halten, die sich im Wesentlichen parallel zu der Rotationsachse R und damit parallel zu dem Flügelbereich 24 des Kolbens 20 in dieser Richtung erstreckt. Außerdem ist in Fig. 2 noch eine Schnittlinie III dargestellt, entlang derer der Querschnitt aus Fig. 3 genommen ist.

In dieser Fig. 3 ist neben den bereits beschriebenen Komponenten Dämpfergehäuse 12, Endkappe 14, Kolbenstange 16, Kolben 20, Niet 28 und elastische Platte 30 noch ein in Richtung der Rotationsachse R verlagerbarer Boden 40 zu erkennen, der mittels zweier als O-Ringe ausgebildeter Dichtungen 42 und 44 gegenüber dem Dämpfergehäuse 12 sowie der Rotationsachse 16 abgedichtet ist, so dass aus dem Innenraum 18 kein Fluid entweichen kann. Zudem ist zwischen dem verlagerbaren Boden 40 und der Endkappe 14 ein als Tellerfeder 46 ausgebildetes elastisches Element vorgesehen, das den Boden 40 in Richtung des Kolbens 20 vorbelastet. Hierbei wirkt die aus dem verlagerbaren Boden 40 und der Tellerfeder 46 gebildete Baugruppe als Überlastsicherung, da der verlagerbare Boden 40 gegen die Wirkung der Tellerfeder 46 bei einem übermäßigen an der Kolbenstange 16 angreifenden externen Drehmoment durch die Verdrängungswirkung des in dem Innenraum 18 aufgenommenen Fluids angehoben wird, wenn dieses nicht mehr mit ausreichender Strömungsrate durch den Kolben hindurch bzw. um ihn herum strömen kann, wodurch das Fluid zusätzlich zwischen dem Kolben 20 und dem verlagerbaren Boden 40 hindurch strömen kann. Auf diese Weise wird eine Umgehung des Kolbens 20 geschaffen, so dass sich die Dämpfungskraft des Dämpfers 10 schlagartig vermindert und dem externen Drehmoment nachgegeben werden kann, indem sich der Kolben 20 mit wesentlich weniger Widerstand in die entsprechende Richtung dreht, bis er an einem der Anschläge 12b zur Anlage kommt.

In den Figuren 4a und 4b sind nun zwei Varianten gezeigt, in denen durch das Zusammenwirken des Kolbens 20 mit der elastischen Platte 30 bzw. 30' eine rotationsrichtungsabhängige Dämpfung erzielt werden kann. Hierbei sind die beiden Kolben 20 bzw. 20' jeweils in einer Vorderansicht gezeigt, also in einer Draufsicht auf eine elastische Platte 30 bzw. 30', wobei jeweils symmetrisch an der Rückseite des Kolbens 20 bzw. 20' eine weitere, nicht gezeigte Platte in gleicher Weise angeordnet ist.

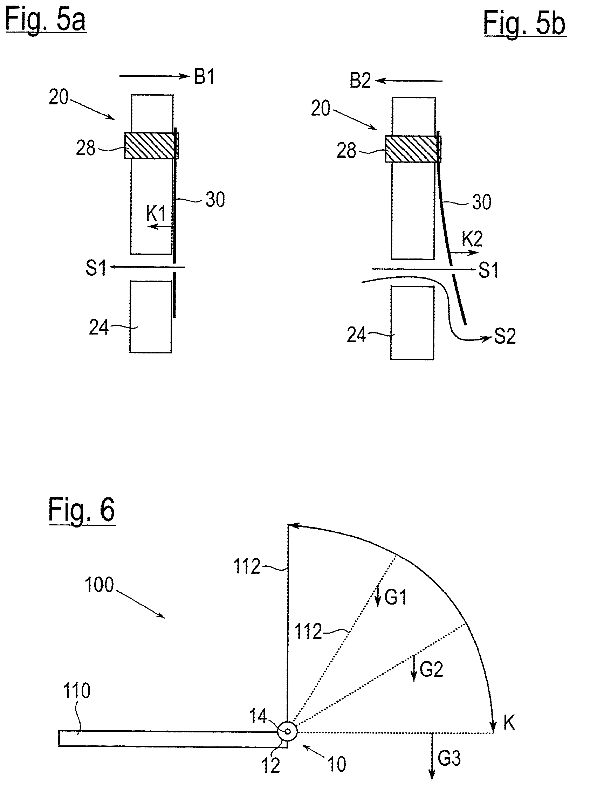

In der ersten Variante aus Fig. 4a ist in den beiden Flügeln 24 des Kolbens 20 neben der für den Niet 28 vorgesehenen Bohrung eine weitere Bohrung 32 vorgesehen, durch die hindurch Fluid durch den Kolben strömen kann. Allerdings sind diese Durchbrechungen 32 zunächst einmal durch die elastischen Platten 30 bedeckt, die allerdings wiederum jeweils eine Durchbrechung 34 mit einem kleineren Querschnitt aufweisen, die in Fig. 4a mit der Durchbrechung 32 des Kolbens zusammenfällt. So steht dem Fluid zum Durchströmen des Kolbens 20 zunächst nur der Querschnitt der Durchbrechung 34 der elastischen Platte 30 zur Verfügung, wie später auch anhand von Fig. 5a erläutert werden wird.

Andererseits sind in der Variante aus Fig. 4b an den Kolbenflügeln 24' des Kolbens 20' jeweils zwei Paare von Durchbrechungen 32a' und 32b' vorgesehen, deren jeweiliger Querschnitt in der Summe einen Gesamt-Durchströmungsquerschnitt für das Fluid durch den Kolben 20' hindurch bildet. Allerdings ist auch hier durch die elastische Platte 30' eine der beiden Durchbrechungen zunächst abgedeckt, während die andere Durchbrechung 32a' in jedem Zustand freigelegt bleibt und als Strömungskanal durch den Kolben 20' hindurch wirken kann.

Als weitere, hier nicht gezeigte Variante ließe sich auch eine Kolben-Platte-Baugruppe ausführen, in der sämtliche Durchbrechungen des Kolbens bei einer Rotation in die erste Richtung von der Platte vollständig abgedeckt sind, so dass in diesem Zustand lediglich ein Umströmen des Kolbens möglich ist. Anders ausgedrückt beträgt der Durchströmungsquerschnitt des Kolbens in dieser Variante bei Rotation in die erste Richtung Null.

Wie sich nun aus den Fig. 5a und 5b ergibt, die zwar die Variante aus Fig. 4a zeigen, deren Funktionsprinzip sich jedoch ohne weiteres auf die Variante aus Fig. 4b übertragen lässt, kann durch ein Abheben der elastischen Platte 30 aufgrund des an ihr wirkenden dynamischen Staudrucks der zur Verfügung stehende Strömungsquerschnitt für Fluid durch den Kolben 20 hindurch erhöht werden. Während bei einer Bewegung des Kolbens in Richtung B1, die in der Figur 2 einer Rotation im Uhrzeigersinn entspricht, der Kolben 20 durch den Staudruck K1 des Fluids gegen den Flügelbereich 24 des Kolbens 20 gepresst wird und somit nur der Querschnitt der Durchbrechung 34 der elastischen Platte 30 als Strömungsweg S1 für das Fluid zur Verfügung steht, wird bei einer entgegengesetzten Bewegung des Kolbens 20 in Richtung B2 durch den Druck K2 des Fluids die elastische Platte 30 vom Flügelbereich 24 des Kolbens 20 abgehoben, so dass neben dem Strömungsweg S1 durch die Durchbrechung 34 der elastischen Platte 30 hindurch auch noch der zweite Strömungsweg S2 durch die Durchbrechung 32 des Kolben 20 und zwischen dem Kolbenflügel 24 und der Platte 30 hindurch zur Verfügung steht. Somit wirkt bei einer Bewegung des Kolbens 20 in Rotationsrichtung B1 eine höhere Dämpfungskraft als bei einer Bewegung in Richtung B2, wobei durch geeignete Wahl der Viskosität des Dämpfungsfluids und der Querschnitte der Durchbrechungen 32 und 34 beliebige Dämpfungshärten in beide Richtungen B1 und B2 eingestellt werden können.

Zuletzt ist in Fig. 6 rein schematisch in einer Seitenansicht eine erfindungsgemäße Sitzanordnung gezeigt, die mit dem Bezugszeichen 100 bezeichnet ist und eine feste Sitzfläche 110 und eine umlegbare Rückenlehne 112 umfasst. Derartige Sitzanordnungen werden beispielsweise in Kraftfahrzeugen eingesetzt, um eine durchgehende Ladefläche zu schaffen, wenn die Sitze nicht in Gebrauch sind, und während im gezeigten Fall ein Umlegen der Rückenlehne aus ihrer im Wesentlichen vertikalen Position in ihre im Wesentlichen horizontale Position von der Sitzfläche weg nach hinten verläuft, so sind auch derartige Anordnungen bekannt, in denen die Rückenlehne 112 in Richtung der Sitzfläche 110 nach vorne umgelegt werden kann. Hierbei ist die drehbare Befestigung der Rückenlehne 112 gegenüber der Sitzfläche 110 durch einen erfindungsgemäßen Rotationsdämpfer 10 bereitgestellt, wobei in diesem Fall die Rotationsachse R die Rotationsachse zwischen Rückenlehne 112 und der Sitzfläche 110 darstellt und das Dämpfergehäuse 12 des Dämpfers 10 der Rückenlehne 112 zugeordnet ist, während die Kolbenstange 16 der Sitzfläche 110 zugeordnet ist.

Während eines Umlegens der Rückenlehne 112 in Richtung des Kreisbogens K wirkt je nach momentanem Winkel der Rückenlehne 112 eine verschieden große Komponente ihrer Gewichtskraft in die vertikale Richtung, wie durch die Pfeile G1, G2 und G3 in drei möglichen Positionen der Rückenlehne 112 angedeutet ist. Durch den erfindungsgemäßen Rotationsdämpfer 10 wird nun einerseits erreicht, dass ein Umlegen der Rückenlehne 112 stärker gedämpft wird als ein Aufrichten der Rückenlehne 112, um einerseits ein schlagartiges Umfallen der Rückenlehne 112 nach hinten zu vermeiden, es andererseits einem Benutzer aber nicht unnötig zu erschweren, die Rückenlehne 112 gegen ihr Gewicht wieder in eine vertikale Position zu bringen. Andererseits nimmt die Dämpfung auch progressiv bei einer Bewegung von der vertikalen in die horizontale Position zu, um einen Ausgleich für ebenfalls zunehmende vertikal wirkende Komponente der Gewichtskraft G1-G3 zu schaffen. Zuletzt wird durch den Rotationsdämpfer 10 auch noch eine Überlastsicherung bereitgestellt, die eine Beschädigung des Dämpfers und anderer Komponenten verhindert.

## Patentansprüche

1. Sitzanordnung mit einer festen Sitzfläche (110) und einer umlegbaren Rückenlehne (112) für ein Fahrzeug, wobei zwischen der festen Sitzfläche (110) und der umlegbaren Rückenlehne (112) ein Dämpfer (10) vorgesehen ist, welcher bei einem Umlegen der Rückenlehne (112) von einer im Wesentlichen vertikalen Position in eine im Wesentlichen horizontale Position eine größere Dämpfungskraft aufweist als bei einer entgegengesetzten Bewegung der Rückenlehne (112),
wobei der Dämpfer (10) ein Rotationsdämpfer (10) ist, welcher umfasst:
- ein fluidgefülltes Dämpfergehäuse (12); und
- einen innerhalb des Dämpfergehäuses (12) um eine Rotationsachse (R) des Rotationsdämpfers in eine erste Richtung (B1) und eine entgegengesetzte zweite Richtung (B2) rotierbar aufgenommenen Kolben (20) mit einer sich in Richtung der Rotationsachse (R) erstreckenden Kolbenstange (16),
**dadurch gekennzeichnet, dass** innerhalb des Dämpfergehäuses (12) ein entlang der Rotationsachse (R) verlagerbarer Boden (40) vorgesehen ist, wobei der Rotationsdämpfer (10) ein thermisches Dehnungselement umfasst, welches derart eingerichtet und angeordnet ist, dass es bei zunehmender Temperatur den verlagerbaren Boden (40) weiter in Richtung des Kolbens (20) verlagert.

2. Sitzanordnung nach Anspruch 1,
wobei der Kolben (20; 20') wenigstens eine Durchbrechung (32; 32a', 32b') mit einem Strömungsquerschnitt aufweist, welche ein Strömen von Fluid durch den Kolben (20; 20') ermöglicht,
wobei sich ein Gesamt-Strömungsquerschnitt als die Summe der Strömungsquerschnitte der wenigstens einen Durchbrechung (32; 32a', 32b') ergibt,
wobei dem Kolben (20; 20') ferner eine Sperrvorrichtung (30; 30') zugeordnet ist, welche dazu eingerichtet ist, den Strömungsquerschnitt von wenigstens einer der Durchbrechungen (32; 32a', 32b') bei einer Rotation des Kolbens (20; 20') in die erste Richtung (B1) gegenüber einer Rotation des Kolbens (20; 20') in die zweite Richtung (B2) zu verkleinern.

3. Sitzanordnung nach Anspruch 2, **dadurch gekennzeichnet, dass** der Gesamt-Strömungsquerschnitt bei einer Rotation des Kolbens (20; 20') in die erste Richtung (B1) größer als Null ist.

4. Sitzanordnung nach Anspruch 2 oder 3, **dadurch gekennzeichnet, dass** die Sperrvorrichtung (30; 30') durch wenigstens eine elastische Platte (30; 30') gebildet ist, welche dem Kolben (20; 20') derart zugeordnet ist, dass sie bei einer Rotation des Kolbens (20; 20') in die erste Richtung (B1) wenigstens eine der Durchbrechungen (32; 32b') wenigstens abschnittsweise bedeckt und bei einer Rotation in die zweite Richtung (B2) die wenigstens eine der Durchbrechungen (32; 32b') im Wesentlichen freigibt, wobei vorzugsweise die elastische Platte (30) wenigstens eine Durchbrechung (34) aufweist, welche sich bei Rotation des Kolbens (20) in die erste Richtung (B1) wenigstens abschnittsweise mit einer der Durchbrechungen (32) überlappt.

5. Sitzanordnung nach einem der Ansprüche 1 bis 4,
wobei an der Innenseite des Dämpfergehäuses (12) über wenigstens einen Rotationswinkelabschnitt wenigstens ein Umgehungskanal (27) bereitgestellt ist, welcher im Bereich seiner Erstreckung ein Umströmen des Kolbens (20) durch Fluid in Richtung entgegen der Rotation des Kolbens (20) ermöglicht.

6. Sitzanordnung nach Anspruch 5, **dadurch gekennzeichnet, dass** der wenigstens eine Umgehungskanal (27) in einer Platte vorgesehen ist, welche sich senkrecht zu der Rotationsachse (R) erstreckt, beispielsweise einem Boden (12d) des Dämpfergehäuses (12).

7. Sitzanordnung nach einem der Ansprüche 5 und 6, **dadurch gekennzeichnet, dass** der wenigstens eine Umgehungskanal (27) einen in Umfangsrichtung variablen Querschnitt aufweist, beispielsweise einen linear ansteigenden Querschnitt.

8. Sitzanordnung nach einem der Ansprüche 1 bis 7, **dadurch gekennzeichnet, dass** der verlagerbare Boden (40) mittels eines elastischen Elements (46), beispielsweise einer mechanischen Feder, insbesondere einer Tellerfeder, in Richtung des Kolbens (20) vorbelastet ist, wobei vorzugsweise dem Kolben (20) ein axiales Dichtungselement zugeordnet ist, wobei der verlagerbare Boden (40) durch die Wirkung des elastischen Elements (46) gegen das axiale Dichtungselement zur Anlage kommt.

9. Sitzanordnung nach einem der Ansprüche 2 bis 8, **dadurch gekennzeichnet, dass** der Kolben (20) bezüglich der Rotationsachse (R) punktsymmetrisch oder drehsymmetrisch ausgebildet ist, und/oder dass der Kolben (20) im Bereich der Rotationsachse (R) einen im Wesentlichen kreisförmigen Nabenbereich (22) aufweist, von welchem sich wenigstens ein Flügelbereich (24) in Richtung einer Innenwand (12a) des Dämpfergehäuses (12) erstreckt, wobei sich ferner von der Innenwand (12a) des Dämpfergehäuses (12) wenigstens ein Vorsprung (12c) in Richtung des Nabenbereichs (22) erstreckt, wobei zwischen dem Vorsprung (12c) und dem Nabenbereich (22) vorzugsweise eine Spaltdichtung vorgesehen ist.

10. Sitzanordnung nach einem der Ansprüche 2 bis 9, **dadurch gekennzeichnet, dass** an einer Innenwand (12a) des Dämpfergehäuses (12) wenigstens ein Anschlag (12b) vorgesehen ist, welcher eine Rotation des Kolbens (20) an einer vorbestimmten Winkelposition begrenzt.

11. Sitzanordnung nach einem der Ansprüche 2 bis 10, wobei zwischen dem Kolben (20) und einer Innenwand (12a) des Dämpfergehäuses (12) wenigstens ein Dichtungselement vorgesehen ist.

12. Sitzanordnung nach einem der vorhergehenden Ansprüche, **dadurch gekennzeichnet, dass** der Dämpfer (10) bei einem Umlegen der Rückenlehne (112) von der im Wesentlichen vertikalen Position in die im Wesentlichen horizontale Position eine zunehmende Dämpfungskraft aufweist, wobei vorzugsweise die Rückenlehne (112) und der Dämpfer (10) derart aneinander angepasst sind, dass bei einem Umlegen der Rückenlehne (112) von der im Wesentlichen vertikalen Position in die im Wesentlichen horizontale Position eine im Wesentlichen konstante Kraft aufzubringen ist.

## Claims

1. Seat arrangement comprising a fixed seat surface (110) and a tiltable backrest (112) for a vehicle, a damper (10) being provided between the fixed seat surface (110) and the tiltable backrest (112), which damper has a greater damping force when the backrest (112) is tilted from a substantially vertical position to a substantially horizontal position than when the backrest (112) moves in the opposite direction, the damper (10) being a rotary damper (10) which comprises:
- a fluid-filled damper housing (12); and
- a piston (20) received within the damper housing (12) so as to be rotatable about an axis of rotation (R) of the rotary damper in a first direction (B1) and an opposite second direction (B2), the piston having a piston rod (16) extending in the direction of the axis of rotation (R),
**characterised in that** a base (40) which can be displaced along the axis of rotation (R) is provided within the damper housing (12), the rotary damper (10) comprising a thermal expansion element which is designed and arranged such that it displaces the displaceable base (40) further in the direction of the piston (20) if there is an increase in temperature.

2. Seat arrangement according to claim 1, wherein the piston (20; 20') has at least one opening (32; 32a', 32b') having a flow cross-section, which opening allows fluid to flow through the piston (20; 20'), wherein a total flow cross-section results as the sum of the flow cross-sections of the at least one opening (32; 32a', 32b'), wherein a blocking device (30; 30') is further associated with the piston (20; 20'), which blocking device is designed to reduce the flow cross-section of at least one of the openings (32; 32a', 32b') when the piston (20; 20') rotates in the first direction (B1) in comparison with a rotation of the piston (20; 20') in the second direction (B2).

3. Seat arrangement according to claim 2, **characterised in that** the total flow cross-section when the piston (20; 20') rotates in the first direction (B1) is greater than zero.

4. Seat arrangement according to either claim 2 or claim 3, **characterised in that** the blocking device (30; 30') is formed by at least one resilient plate (30; 30') which is associated with the piston (20; 20') such that it covers at least one of the openings (32; 32b') at least in portions when the piston (20; 20') rotates in the first direction (B1) and substantially unblocks the at least one of the openings (32; 32b') when the piston rotates in the second direction (B2), the resilient plate (30) preferably having at least one opening (34) which overlaps one of the openings (32) at least in portions when the piston (20) rotates in the first direction (B1).

5. Seat arrangement according to any of claims 1 to 4, wherein at least one bypass channel (27) is provided on the inside of the damper housing (12) over at least one rotational angle portion, which bypass channel, in the region of its extent, allows fluid to flow around the piston (20) in the direction counter to the rotation of the piston (20).

6. Seat arrangement according to claim 5, **characterised in that** the at least one bypass channel (27) is provided in a plate which extends perpendicularly to the axis of rotation (R), for example a base (12d) of the damper housing (12).

7. Seat arrangement according to either claim 5 or claim 6, **characterised in that** the at least one bypass channel (27) has a cross-section that is variable in the circumferential direction, for example a linearly increasing cross-section.

8. Seat arrangement according to any of claims 1 to 7, **characterised in that** the displaceable base (40) is preloaded in the direction of the piston (20) by means of a resilient element (46), for example a mechanical spring, in particular a disk spring, an axial sealing element preferably being associated with the piston (20), the displaceable base (40) coming to rest against the axial sealing element by the action of the resilient element (46).

9. Seat arrangement according to any of claims 2 to 8, **characterised in that** the piston (20) is point-symmetrical or rotationally symmetrical with respect to the axis of rotation (R), and/or **in that** the piston (20) has a substantially circular hub region (22) in the region of the axis of rotation (R), from which hub region at least one vane region (24) extends in the direction of an inner wall (12a) of the damper housing (12), and furthermore at least one projection (12c) extending from the inner wall (12a) of the damper housing (12) in the direction of the hub region (22), a gap seal preferably being provided between the projection (12c) and the hub region (22).

10. Seat arrangement according to any of claims 2 to 9, **characterised in that** at least one stop (12b) is provided on an inner wall (12a) of the damper housing (12), which stop limits a rotation of the piston (20) at a predetermined angular position.

11. Seat arrangement according to any of claims 2 to 10, wherein at least one sealing element is provided between the piston (20) and an inner wall (12a) of the damper housing (12).

12. Seat arrangement according to any of the preceding claims, **characterised in that** the damper (10) has an increasing damping force when the backrest (112) is tilted from the substantially vertical position into the substantially horizontal position, the backrest (112) and the damper (10) preferably being adapted to one another such that a substantially constant force has to be applied when the backrest (112) is titled from the substantially vertical position into the substantially horizontal position.

## Revendications

1. Agencement de siège avec une surface assise fixe (110) et un dossier rabattable (112) pour un véhicule, dans lequel un amortisseur (10) est prévu entre la surface assise fixe (110) et le dossier rabattable (112), lequel amortisseur (10) a une plus grande force d'amortissement lorsque le dossier (112) est rabattu d'une position sensiblement verticale à une position sensiblement horizontale que lorsque le dossier (112) est déplacé dans la direction opposée,
dans lequel l'amortisseur (10) est un amortisseur de rotation (10) qui comprend :
- un boîtier d'amortisseur rempli de fluide (12), et
- un piston (20) logé de manière à pouvoir tourner dans le boîtier d'amortisseur (12) autour d'un axe de rotation (R) de l'amortisseur de rotation dans une première direction (B1) et dans une deuxième direction opposée (B2), avec une tige de piston (16) s'étendant dans la direction de l'axe de rotation (R), **caractérisé en ce qu'**un fond (40) déplaçable le long de l'axe de rotation (R) est prévue à l'intérieur du boîtier d'amortisseur (12), dans lequel l'amortisseur de rotation (10) comprend un élément d'expansion thermique qui est adapté et agencé de telle sorte qu'il déplace le fond déplaçable (40) davantage en direction du piston (20) lorsque la température augmente.

2. Agencement de siège selon la revendication 1, dans lequel le piston (20 ; 20') présente au moins un passage (32 ; 32a', 32b') avec une section transversale d'écoulement, qui permet au fluide de s'écouler à travers le piston (20 ; 20'),
dans lequel une section transversale d'écoulement totale est définie comme la somme des sections transversales d'écoulement dudit au moins un passage (32 ; 32a', 32b'),
dans lequel le piston (20 ; 20') est en outre associé à un dispositif de verrouillage (30 ; 30') qui est adapté pour réduire la section transversale d'écoulement d'au moins un des passages (32 ; 32a', 32b') lors de la rotation du piston (20 ; 20') dans la première direction (B1) par rapport à une rotation du piston (20 ; 20') dans la deuxième direction (B2).

3. Agencement de siège selon la revendication 2, **caractérisé en ce que** la section transversale d'écoulement totale est supérieure à zéro lors de la rotation du piston (20 ; 20') dans la première direction (B1).

4. Agencement de siège selon la revendication 2 ou 3, **caractérisé en ce que** le dispositif de verrouillage (30 ; 30') est formé par au moins une plaque élastique (30 ; 30') qui est associée au piston (20 ; 20') de telle manière qu'elle recouvre au moins par sections au moins un des passages (32 ; 32b') lorsque le piston (20 ; 20') tourne dans la première direction (B1) et, lors de la rotation du piston (20 ; 20') dans la deuxième direction (B2), libère sensiblement ledit au moins un des passages (32 ; 32b'), dans lequel de préférence la plaque élastique (30) présente au moins un passage (34) qui, lors de la rotation du piston (20) dans la première direction (B1), chevauche au moins par sections l'un des passages (32).

5. Agencement de siège selon l'une des revendications 1 à 4,
dans lequel au moins un canal de dérivation (27) est prévu sur la face intérieure du boîtier d'amortisseur (12) sur au moins une section d'angle de rotation, lequel canal de dérivation (27) permet au fluide de circuler autour du piston (20) dans la direction opposée à la rotation du piston (20) dans la zone de son extension.

6. Agencement de siège selon la revendication 5, **caractérisé en ce que** ledit au moins un canal de dérivation (27) est prévu dans une plaque s'étendant perpendiculairement à l'axe de rotation (R), par exemple un fond (12d) du boîtier d'amortisseur (12).

7. Agencement de siège selon l'une des revendications 5 et 6, **caractérisé en ce que** ledit au moins un canal de dérivation (27) présente une section transversale variable dans la direction circonférentielle, par exemple une section transversale qui augmente linéairement.

8. Agencement de siège selon l'une des revendications 1 à 7, **caractérisé en ce que** le fond déplaçable (40) est précontraint en direction du piston (20) au moyen d'un élément élastique (46), par exemple un ressort mécanique, en particulier une rondelle-ressort, dans lequel un élément d'étanchéité axial est de préférence associé au piston (20), le fond déplaçable (40) venant en appui contre l'élément d'étanchéité axial par l'action de l'élément élastique (46).

9. Agencement de siège selon l'une des revendications 2 à 8, **caractérisé en ce que** le piston (20) est adapté à symétrie ponctuelle ou à symétrie de rotation par rapport à l'axe de rotation (R), et/ou **en ce que** le piston (20) présente une zone de moyeu (22) sensiblement circulaire dans la zone de l'axe de rotation (R), dont au moins une zone d'aile (24) s'étend en direction d'une paroi intérieure (12a) du boîtier d'amortisseur (12), dans lequel en outre au moins une saillie (12c) s'étend depuis la paroi intérieure (12a) du boîtier d'amortisseur (12) en direction de la zone de moyeu (22), dans lequel un joint d'étanchéité à fente est de préférence prévu entre la saillie (12c) et la zone de moyeu (22).

10. Agencement de siège selon l'une des revendications 2 à 9, **caractérisé en ce qu'**au moins une butée (12b) est prévue sur une paroi intérieure (12a) du boîtier d'amortisseur (12), qui limite une rotation du piston (20) à une position angulaire prédéterminée.

11. Agencement de siège selon l'une des revendications 2 à 10, dans lequel au moins un élément d'étanchéité est prévu entre le piston (20) et une paroi intérieure (12a) du boîtier d'amortisseur (12).

12. Agencement de siège selon l'une des revendications précédentes, **caractérisé en ce que** l'amortisseur (10) présente une force d'amortissement croissante lorsque le dossier (112) est rabattu de la position sensiblement verticale à la position sensiblement horizontale, dans lequel de préférence le dossier (112) et l'amortisseur (10) sont adaptés l'un à l'autre de telle manière qu'une force sensiblement constante doit être appliquée lorsque le dossier (112) est rabattu de la position sensiblement verticale à la position sensiblement horizontale.
